# EUROPÄISCHE PATENTSCHRIFT

(11) **EP 2 957 461 B1**
(45) Veröffentlichungstag und Bekanntmachung des Hinweises auf die Patenterteilung: **16.01.2019**
(21) Anmeldenummer: 15001703.6
(22) Anmeldetag: 09.06.2015
(51) Int. Cl.: B60Q 1/08, B60Q 1/18

(54) **KRAFTFAHRZEUG UND VERFAHREN ZUM BEREITSTELLEN EINES STATISCHEN KREUZUNGSLICHTS**
MOTOR VEHICLE AND METHOD FOR PROVIDING A STATIC INTERSECTION LIGHT
VEHICULE AUTOMOBILE ET PROCEDE DE PREPARATION D'UN FEU DE CROISEMENT STATIQUE

(30) Priorität: 20.06.2014 DE 102014009252
(43) Veröffentlichungstag der Anmeldung: 23.12.2015
(73) Patentinhaber: AUDI AG, 85045 Ingolstadt (DE)
(72) Erfinder: Funk, Christian, 92339 Beilngries (DE); Omerbegovic, Said, 65933 Frankfurt (DE)
(74) Vertreter: Thielmann, Frank

(56) Entgegenhaltungen:
- DE-A1- 10 300 771
- DE-A1- 19 602 622
- DE-A1-102005 032 848
- DE-A1-102012 103 319
- DE-A1-102012 103 630
- DE-A1-102013 102 710
- JP-A- 2007 182 151
- JP-A- 2012 224 292

## Beschreibung

Die Erfindung geht aus von einem Kraftfahrzeug mit mindestens einem Hauptscheinwerfer zum Bereitstellen eines statischen Kreuzungslichts, wobei das Kraftfahrzeug eine Steuereinrichtung zum Ansteuern des zumindest einen Hauptscheinwerfers aufweist, die dazu ausgelegt ist, das Kreuzungslicht zu aktivieren, wenn das Kraftfahrzeug einen vorgebbaren Abstand zu einer Kreuzung oder Einmündung unterschreitet. Des Weiteren geht die Erfindung aus von einem Verfahren zum Bereitstellen eines statischen Kreuzungslichts mittels zumindest eines Hauptscheinwerfers eines Kraftfahrzeugs, wobei das Kreuzungslicht aktiviert wird, wenn das Kraftfahrzeug einen vorgebbaren Abstand zu einer Kreuzung oder Einmündung unterschreitet.

Aus dem Stand der Technik sind zum einen Kraftfahrzeuge mit dynamischem Kurvenlicht bekannt. Beim dynamischen Kurvenlicht können die Kurvenlichtscheinwerfer in Anpassung an den Straßenverlauf geschwenkt werden.

Beispielsweise beschreibt die DE 10 2008 054 005 A1 ein Verfahren und eine Vorrichtung zum Einstellen von Kurvenlichtscheinwerfern, insbesondere bei der Durchfahrt von Kreuzungen oder Einmündungen. Das Kraftfahrzeug weist dabei schwenkbare Kurvenlichtscheinwerfer auf. Der Schwenkwinkel wird dabei ermittelt, indem anhand einer digitalen Straßenkarte ein in der Fahrbahnmitte liegender Punkt in einer vorbestimmten Vorrausschaudistanz bestimmt wird und als Schwenkwinkel der Winkel zwischen der Fahrzeuglängsachse und einer Gerade vom Kraftfahrzeug zum Punkt berechnet und eingestellt wird. Die vorbestimmte Vorrausschaudistanz wird während des Annäherns an eine Kreuzung oder Einmündung auf die Entfernung zu dieser begrenzt, um zu gewährleisten, dass beim Durchfahren einer Kreuzung, diese auch beleuchtet ist und die Scheinwerfer nicht in Anpassung an eine nachfolgende Kurve weggeschwenkt werden.

Des Weiteren beschreibt die US 2012/0044708 A1 ebenfalls ein Verfahren zum vorausschauenden Einstellen eines dynamischen Kurvenlichts, bei dem die Vorausschaudistanz in Abhängigkeit vom Straßenverlauf und der Geschwindigkeit dynamisch geregelt wird.

Beim dynamischen Kurvenlicht entspricht der Öffnungswinkel des von den Scheinwerfern ausgesandten Lichtkegels im Wesentlichen dem des normalen Abblend- oder Fernlichts, so dass dadurch keine bessere oder breitere Ausleuchtung einer Kreuzung realisiert werden kann.

Um die Übersichtlichkeit im Fall einer Kreuzung durch bessere Ausleuchtung zu erhöhen, gibt es zum anderen Fahrzeuge mit einem statischen Kurvenlicht, auch Kreuzung- oder Abbiegelicht genannt. Dies kann über eine Lichtquelle in den Hauptscheinwerfern realisiert sein, die bei Erkennen einer Annäherung des Kraftfahrzeugs an eine Kreuzung, z.B. über GPS- und Navigationsdaten, oder bei Erkennen eines Abbiegevorgangs, z.B. durch Betätigung des Blinkers oder Einschlagen des Lenkrads, aktiviert wird. Da das statische Kurvenlicht, im Gegensatz zum dynamischen Kurvenlicht, dem Zweck dient, nicht nur die aktuell befahrene Straße sondern auch möglichst große Bereiche von die befahrene Straße kreuzenden Straßen oder Einmündungen beleuchten zu können, ist die durch das statische Kurvenlicht bereitgestellte Ausleuchtung der Straße in lateraler Richtung, d.h. senkrecht zur Fahrzeuglängsachse, sehr breit, d.h. der Öffnungswinkel des Lichtkegels ist deutlich breiter als beim normalen Abblendlicht. Nachteilig dabei ist jedoch, dass, um eine Blendung entgegenfahrender Fahrzeugführer zu vermeiden, die Lichtfunktion des statischen Abbiege- oder Kreuzungslichts damit erst sehr spät, d.h. in einem sehr geringen Abstand zu einer Kreuzung aktiviert werden kann. Die Aufmerksamkeit des Fahrers wird folglich sehr spät in Randbereiche einer Kreuzung gelenkt.

Die DE 103 00 771 A1 beschreibt ein Kraftfahrzeug mit einem Scheinwerfer, der mehrere Lampen aufweisen kann. Beim Annnähern an eine Kreuzung oder Einmündung kann der vom Scheinwerfer abgestrahlte Lichtkegel verändert werden, sodass der Kreuzungs- oder Einmündungsbereich weiträumig ausgeleuchtet ist. Der Übergang zwischen dem Zustand des Scheinwerfers oder der Lampen vor der Kreuzung oder Einmündung und dem Zustand im Kreuzungs- oder Einmündungsbereich ist durch die Steuerung kontinuierlich durch dimmbare Lichtquellen oder schrittweise steuerbar.

Die DE 10 2012 103 319 A1 beschreibt ein Verfahren für die Veränderung einer Ausleuchtsituation vor einem Fahrzeug mit einem Lichtmodul mit einer Basislichtquelle und einer Zusatzlichtquelle, die jeweils eine Mehrzahl an LEDs aufweisen können. Dabei wird, wenn die Notwendigkeit für die Änderung der Ausleuchtsituation erkannt wird, ein selektives Zuschalten der LEDs der Zusatzlichtquelle bewirkt.

Die DE 10 2013 102 710 A1 beschreibt eine Scheinwerfervorrichtung für Automobile mit einem linken und rechten statischen Kurvenlicht, welche in Abhängigkeit von der Fahrgeschwindigkeit beim Einfahren auf eine Kreuzung eingeschaltet werden können.

Die DE 10 2005 032 848 A1 beschreibt ein Verfahren zur Fahrerunterstützung, bei dem mittels einer Kamera Verkehrselemente, wie beispielsweise eine Kreuzung, auf der Straße erkannt werden, die auf potentielle Gefahrenräume hinweisen, und ein Scheinwerfer des Fahrzeugs derart gesteuert wird, dass der Gefahrenraum weitgehend ausgeleuchtet ist.

JP2012224292A und JP2007182151 A offenbaren Beleuchtungsvorrichtungen, die in Abhängigkeit von dem Abstand zur Kreuzung, die Lichtverteilung des Fahrzeuges anpassen.

Aufgabe der vorliegenden Erfindung ist es daher, ein Kraftfahrzeug und ein Verfahren zum Bereitstellen eines statischen Kreuzungslichts bereitzustellen, die eine möglichst frühzeitige Aktivierung eines Kreuzungslichts ermöglichen, ohne dabei auf eine möglichst breite Ausleuchtung eines Kreuzungsbereichs verzichten zu müssen.
Diese Aufgabe wird gelöst durch ein Kraftfahrzeug und ein Verfahren gemäß den unabhängigen Ansprüchen. Vorteilhafte Ausgestaltungen der Erfindung finden sich in den abhängigen Ansprüchen.

Das erfindungsgemäße Kraftfahrzeug mit mindestens einem Hauptscheinwerfer zum Bereitstellen eines statischen Kreuzungslichts weist eine Steuereinrichtung zum Ansteuern des zumindest einen Hauptscheinwerfers auf, die dazu ausgelegt ist, das Kreuzungslicht zu aktivieren, wenn das Kraftfahrzeug einen vorgebbaren Abstand zu einer Kreuzung oder Einmündung unterschreitet. Des Weiteren weist der mindestens eine Hauptscheinwerfer eine Mehrzahl an dem Kreuzungslicht zugeordneten Segmenten auf, wobei in jedem Segment zumindest eine Lichtquelle angeordnet ist. Dabei ist die Steuereinrichtung dazu ausgelegt, bei aktiviertem Kreuzungslicht und bei einer Annäherung des Kraftfahrzeugs an die Kreuzung oder Einmündung, die Segmente derart anzusteuern, dass sich eine Abmessung eines durch das Kreuzungslicht ausgeleuchteten Bereichs in einem gegebenen Abstand in Fahrtrichtung vor dem Kraftfahrzeug in einer horizontalen Richtung senkrecht zur Längsachse des Kraftfahrzeugs in einer Mehrzahl an Stufen stufenweise vergrößert.

Mit anderen Worten wird so ein Öffnungswinkel des Lichtkegels des Kreuzungslichts, insbesondere in horizontaler Richtung, stufenweise vergrößert. Die Erfindung beruht dabei auf der Erkenntnis, dass, wenn sich das Kraftfahrzeug in einer größeren Entfernung zur Kreuzung oder Einmündung befindet, die Kreuzung oder Einmündung in einem kleineren Raumwinkelbereich vom Fahrzeug aus betrachtet liegt und wenn sich das Kraftfahrzeug in einer kleineren Entfernung zur Kreuzung oder Einmündung befindet, die Kreuzung oder Einmündung in einem größeren Raumwinkelbereich vom Fahrzeug aus betrachtet liegt. Daher kann die Kreuzung, wenn das Kraftfahrzeug sich in einem großen Abstand zur Kreuzung oder Einmündung befindet, mit einem Lichtkegel mit kleinem Öffnungswinkel genauso oder ähnlich breit ausgeleuchtet werden, wie wenn sich das Kraftfahrzeug in einer kleineren Entfernung zur Kreuzung oder Einmündung befindet und der Lichtkegel des Kreuzungslichts einen größeren Öffnungswinkel aufweist. Durch die Erfindung wird es somit vorteilhafter Weise ermöglicht, das Kreuzungslicht bereits schon sehr frühzeitig zu aktivieren und damit die Aufmerksamkeit des Fahrers bereits sehr früh auf eine Kreuzung oder Einmündung zu lenken. Durch die zunehmende Verbreiterung des ausgeleuchteten Bereichs bzw. der Vergrößerung des Öffnungswinkels kann eine möglichst breite Ausleuchtung der Kreuzung, insbesondere in gleicher Weise sowohl bei großer als auch kleiner Entfernung zur Kreuzung oder Einmündung, gewährleistet werden. Vorteilhafterweise wird also eine möglichst frühzeitige Aktivierung eines Kreuzungslichts ermöglicht, ohne dabei auf eine möglichst breite Ausleuchtung eines Kreuzungsbereichs verzichten zu müssen.

Darüber hinaus ist der Steuereinrichtung ein Wert für eine auszuleuchtende Breite an einem Ort der Kreuzung oder Einmündung senkrecht zu einem Straßenverlauf einer aktuell befahrenen Straße vorgegeben und die Steuereinrichtung ist dazu ausgelegt, die Segmente derart anzusteuern, dass bei Annäherung des Kraftfahrzeugs an die Kreuzung oder Einmündung der Ort der Kreuzung oder Einmündung mit der Breite mit dem vorgegebenen Wert ausgeleuchtet ist. So kann die Steuereinrichtung z.B. in Abhängigkeit der unten noch genannten Eingangsgrößen bei Annäherung an die Kreuzung oder Einmündung den durch die Segmente bereitgestellten Lichtkegel in seinem Öffnungswinkel so regeln, dass die Kreuzung jederzeit mit der vorgegebenen Breite ausgeleuchtet wird. Dabei kann sich der vorgegebene Wert der Breite aus der Straßenbreite der aktuell befahrenen Straße am Ort der Kreuzung oder Einmündung und einem Zusatzwert, insbesondere für eine jeweilige Einmündung, zusammensetzen, der angibt, in welchem Maß die jeweilige Einmündung selbst beleuchtet werden soll. Auf diese Weise lässt sich die Geometrie der aktuell befahrenen Straße berücksichtigen und so vorteilhafterweise eine optimale Ausleuchtung der Kreuzung oder Einmündung gewährleisten.

Ein weiterer Vorteil dabei ist, dass die stufenweise Vergrößerung des Öffnungswinkels dabei durch ein statisches Kreuzungslicht realisiert ist. Unter einem statischen Kreuzungslicht ist dabei zu verstehen, dass die dem Kreuzungslicht zugeordneten Elemente des Hauptscheinwerfers, wie z.B. die Segmente bzw. die Lichtquellen der Segmente sowie ggf. weitere Elemente wie Reflektoren und/oder Linsen statisch, d.h. nicht bewegbar, insbesondere nicht durch Aktoren bewegbar, angeordnet sind. Die stufenweise Vergrößerung des Öffnungswinkels des Lichtkegels wird somit allein durch eine entsprechende Ansteuerung der Segmente des Hauptscheinwerfers, bzw. den in den Segmenten angeordneten Lichtquellen realisiert und ermöglicht somit eine besonders einfache und kostengünstige Ausbildung des Hauptscheinwerfers, da keine aufwendige Aktorik zum Schwenken der dem Kreuzungslicht zugeordneten Elementen des Hauptscheinwerfers vorgesehen werden muss. Zudem kann so deutlich mehr Flexibilität bereitgestellt werden, da die Ansteuerung der einzelnen Segmente keiner eingeschränkten Dynamik wie das Schwenken der Scheinwerfer unterliegt.

Bei einer vorteilhaften Ausgestaltung der Erfindung ist die Steuereinrichtung dazu ausgelegt, die Segmente derart anzusteuern, dass sich die Anzahl an aktivierten, insbesondere eingeschalteten, Lichtquellen erhöht. Bevorzugt sind die Segmente dabei derart ausgebildet und angeordnet, dass sich durch eine Erhöhung der Anzahl an aktivierten Lichtquellen die Abmessung des durch das Kreuzungslicht ausgeleuchteten Bereichs in dem gegebenen Abstand in Fahrtrichtung vor dem Kraftfahrzeug in der horizontalen Richtung senkrecht zur Längsachse des Kraftfahrzeugs stufenweise vergrößert. Eine jeweilige Erhöhung der Anzahl an aktivierten Lichtquellen bzw. eine jeweilige Aktivierung einer oder mehrerer Lichtquelle zu einem gegebenen Zeitpunkt entspricht dabei einer jeweiligen Stufe der Vergrößerung der genannten Abmessung. Beispielsweise können die Segmente und die darin angeordneten Lichtquellen so angeordnet sein, dass die Lichtquellen von innen nach außen bezogen auf die Fahrzeuglängsachse sukzessive zuschaltbar sind, um den Öffnungswinkel des Lichtkegels stufenweise zu vergrößern. Die stufenweise Vergrößerung kann dabei in zwei, bevorzugt aber in mehr als zwei Stufen erfolgen, wie z.B. 3, 4, 5, 6, 7, 8 oder mehr Stufen. Je mehr Stufen vorgesehen sind, desto kontinuierlicher wirkt der Verbreiterungsvorgang des Lichtkegels auf den Benutzer und desto besser ist der Öffnungswinkel des Lichtkegels an eine jeweilige Straßen- und Kreuzungsgeometrie anpassbar.

Weiterhin kann es auch vorgesehen sein, dass der vorgebbare Abstand zu einer Kreuzung, bei dessen unterschreiten das Kreuzungslicht aktiviert wird, nicht fest vorgegeben ist sondern in Abhängigkeit einer bestimmten Größe, wie z.B. in Abhängigkeit von der Geschwindigkeit des Kraftfahrzeugs, vorgegeben wird, und die Anzahl der Stufen in Abhängigkeit vom vorgebbaren Abstand vorgegeben wird. Beispielsweise kann der vorgebbare Abstand um so größer sein, je größer die Fahrzeuggeschwindigkeit ist, so dass vorteilhafterweise bei höheren Geschwindigkeiten ein früheres und damit rechtzeitiges Aktivieren des Kreuzungslichts erfolgt. Gleichzeitig kann so auf vorteilhafte Weise bewerkstelligt werden, dass die Anzahl der Stufen durch die Steuereinrichtung um so größer gewählt wird, je größer der vorgebbare Abstand ist, ab dem das Kreuzungslicht aktiviert wird, so dass situationsangepasst immer ein optimale Ausleuchtung und Kontinuität der Ausleuchtung gegeben ist.

Bei einer vorteilhaften Ausgestaltung der Erfindung ist die Steuereinrichtung dazu ausgelegt, die Segmente in Abhängigkeit von zumindest einer Eingangsgröße aus der Gruppe Abstand des Kraftfahrzeugs von der Kreuzung, Breite einer aktuell befahrenen Straße, Position des Kraftfahrzeugs auf der aktuell befahrenen Straße in einer Richtung senkrecht zu einem Straßenverlauf der aktuell befahrenen Straße und aktuelle Geschwindigkeit des Kraftfahrzeugs zu steuern. Der Abstand des Kraftfahrzeugs von der Kreuzung kann dabei durch GPS, Navigationsdaten und/oder digitale Kartendaten ermittelt werden. Insbesondere kann die Position des Kraftfahrzeugs durch GPS mittels eines GPS-Empfängers des Kraftfahrzeugs ermittelt werden und der Abstand des Kraftfahrzeugs von der Kreuzung durch Abgleich der Kraftfahrzeug-GPS-Koordinaten mit einer digitalen, insbesondere im Kraftfahrzeug abgelegten, Straßenkarte bzw. Kartendaten. Die Fahrzeuggeschwindigkeit kann durch die fahrzeugeigenen Geschwindigkeitssensoren erfasst werden oder ebenfalls mittels GPS. Die durch Fahrzeugsensoren erfasste Fahrzeuggeschwindigkeit kann beispielweise auch zur Interpolation der GPS-Daten dienen, die sich nur in bestimmten Zeitabständen aktualisieren. Weiterhin kann über GPS auch die Anzahl der Fahrspuren der aktuell befahrenen Fahrbahn, insbesondere in Fahrtrichtung und in Gegenrichtung, erfasst werden. Die Position des Kraftfahrzeugs auf der aktuell befahrenen Straße in einer Richtung senkrecht zum Straßenverlauf kann durch eine oder mehrere Außenkameras des Kraftfahrzeugs bestimmt werden. Insbesondere kann dabei auch die aktuell befahrene Fahrspur bestimmt werden. Diese Eingangsgrößen erlauben somit eine sehr situationsangepasste Steuerung des Kreuzungslichts. Um einen möglichst hohen Anpassungsgrad erreichen zu können, gehen bevorzugt mehrere der oben genannten Eingangsgrößen und besonders bevorzugt alle der genannten Eingangsgrößen in die Steuerung bzw. Regelung der einzelnen Segmente ein. Darüber hinaus können noch weitere Eingangsgrößen eingehen, wie z.B. die Breite der Randbebauung, z.B. der Bordstein, die über entsprechende Erfassungsmittel des Kraftfahrzeugs erfasst werden können, oder auch die Kreuzungsgeometrie, z.B. durch Erfassen eines Abzweigewinkels einer jeweiligen Einmündung.

Bei einer weiteren vorteilhaften Ausgestaltung der Erfindung weist das Kraftfahrzeug zwei als der mindestens eine Hauptscheinwerfer ausgebildete Hauptscheinwerfer auf, wobei die Steuereinrichtung dazu ausgebildet ist, die Segmente eines jeweiligen Hauptscheinwerfers separat anzusteuern. Die Möglichkeit der separaten Ansteuerung erlaubt dabei vorteilhafter Weise auch eine asynchrone oder asymmetrische Ansteuerung bezüglich der Fahrzeuglängsachse. Dabei kann beispielsweise der laterale Versatz des Kraftfahrzeugs gegenüber einer in Fahrtrichtung links und rechts abzweigenden Abzweigung bzw. Einmündung berücksichtigt werden, was somit eine optimale Ausleuchtung der Kreuzung bzw. Einmündungen ermöglicht. Fährt das Kraftfahrzeug beispielsweise auf der rechten Spur und nähert sich einer Kreuzung mit zwei gegenüberliegenden Abzweigungen, so ist der laterale Abstand zur in Fahrtrichtung linken Einmündung größer als zur rechten Einmündung. Durch einen größeren Öffnungswinkel des Lichtkegels von der Fahrzeuglängsachse aus betrachtet nach links als nach rechts kann diesem Umstand auf besonders vorteilhafte Weise Rechnung getragen werden. Dies kann beispielsweise dadurch bewerkstelligt werden, dass für eine in Fahrtlichtung links liegende nächste erste Einmündung ein Zusatzwert für die über die Breite der aktuell befahrenen Straße hinausgehenden auszuleuchtende Breite am Ort der ersten Einmündung vorgegeben wird und für eine in Fahrtrichtung rechts liegende nächste zweite Einmündung ein Zusatzwert für die über die Breite der aktuell befahrenen Straße hinausgehenden auszuleuchtenden Breite am Ort der zweiten Einmündung vorgegeben wird und die Steuereinrichtung dazu ausgelegt ist, einen jeweiligen korrespondierenden Hauptscheinwerfer, also den in Fahrtrichtung linken für die erste Einmündung und den in Fahrtrichtung rechten für die zweite Einmündung, so anzusteuern, dass die erste und die zweite Einmündung jeweils in lateraler Richtung mit dem jeweiligen vorgegebenen Zusatzwert ausgeleuchtet sind, insbesondere zu jedem Zeitpunkt der Annäherung des Kraftfahrzeugs an die erste und zweite Einmündung und auch, wenn der Ort der ersten und zweiten Einmündung in longitudinaler Richtung, d.h. in Fahrtrichtung bzw. in Straßenverlaufsrichtung der aktuell befahrenen Straße, verschieden sind. Dies gilt darüber hinaus auch, wenn das Fahrzeug sich nur einer einzigen Einmündung nähert, also einer linken oder einer rechten, oder wenn sich das Fahrzeug einer Kreuzung mit mehr als zwei Einmündungen nähert. Dabei können also sukzessive für jeweils aufeinanderfolgende Einmündungen, links oder rechts, nacheinander jeweilige Zusatzwerte vorgegeben werden und die Steuereinrichtung regelt die Segmente der jeweiligen Hauptscheinwerfer entsprechend. Dies ermöglicht eine besonders flexible Anpassung der Ausleuchtung auf jede beliebige Kreuzungs- und Abzweigungsgeometrie, insbesondere z.B. auch unter Berücksichtigung der Richtung bzw. des Winkels der Abzweigung oder Anzahl und Anordnung der Abzweigungen.

Daher stellt es eine besonders vorteilhafte Ausgestaltung der Erfindung dar, wenn der bei aktiviertem Kreuzungslicht durch die Segmente der zwei Hauptscheinwerfer bereitgestellte Gesamtlichtkegel in einer horizontalen Ebene einen Öffnungswinkel aufweist, der durch eine Fahrzeuglängsachse in einen ersten und einen zweiten Winkel geteilt ist, wobei die Steuereinrichtung dazu ausgelegt ist, bei einer Annäherung des Kraftfahrzeugs an eine Kreuzung mit einer in Fahrtrichtung linken Einmündung und einer in Fahrtrichtung rechten Einmündung die Segmente eines jeweiligen Hauptscheinwerfers derart separat anzusteuern, dass sich der erste Winkel in Abhängigkeit von einer Entfernung des Kraftfahrzeugs von einer in Fahrtrichtung linken Einmündung stufenweise vergrößert und der zweite Winkel sich in Abhängigkeit von einer Entfernung von der in Fahrtrichtung rechten Einmündung stufenweise vergrößert. Der erste und der zweite Winkel können sich im Allgemeinen stufenweise bis zu einem jeweiligen maximalen rechten und linken Öffnungswinkel vergrößern, wobei weiterhin der rechte und der linke Öffnungswinkel zu einem jeweiligen gegebenen Zeitpunkt voneinander verschieden sein können und insbesondere voneinander verschieden sind, wenn der Abstand des Kraftfahrzeugs von der linken Einmündung vom Abstand des Kraftfahrzeug von der rechten Einmündung verschieden ist. Auch die Anzahl der Stufen, in denen die Verbreiterung der jeweiligen Winkel erfolgt, kann dabei unterschiedlich sein und/oder zeitlich asynchron. Somit sind vielzählige Steuer- und Regelmöglichkeiten gegeben, die durch die separate Ansteuerung jeweiliger einzelner Segmente der jeweiligen Hauptscheinwerfern in Abhängigkeit von den oben genannten Eingangsgrößen jederzeit eine optimal angepasste Ausleuchtung eines Kreuzungs- und Einmündungsbereichs erlauben. Hat das Kraftfahrzeug die Kreuzung oder Einmündung passiert oder ist abgebogen, kann die Steuereinrichtung das Kreuzungslicht schließlich wieder deaktivieren.

Des Weiteren betrifft die Erfindung ein Verfahren zum Bereitstellen eines statischen Kreuzungslichts mittels zumindest eines Hauptscheinwerfers eines Kraftfahrzeugs, wobei das Kreuzungslicht aktiviert wird, wenn das Kraftfahrzeug einen vorgebbaren Abstand zu einer Kreuzung oder Einmündung unterschreitet. Weiterhin weist der mindestens eine Hauptscheinwerfer eine Mehrzahl an dem Kreuzungslicht zugeordneten Segmenten auf, wobei in jedem Segment zumindest eine Lichtquelle angeordnet ist. Dabei werden bei aktiviertem Kreuzungslicht und bei einer Annäherung des Kraftfahrzeugs an die Kreuzung oder Einmündung, die Segmente derart angesteuert, dass sich eine Abmessung eines durch das Kreuzungslicht ausgeleuchteten Bereichs in einem gegebenen Abstand in Fahrtrichtung vor dem Kraftfahrzeug in einer horizontalen Richtung senkrecht zur Längsachse des Kraftfahrzeugs in einer Mehrzahl an Stufen stufenweise vergrößert. Dabei ist ein Wert für eine auszuleuchtende Breite an einem Ort der Kreuzung oder Einmündung senkrecht zu einem Straßenverlauf einer aktuell befahrenen Straße vorgegeben und die Segmente werden derart angesteuert, dass bei Annäherung des Kraftfahrzeugs an die Kreuzung oder Einmündung der Ort der Kreuzung oder Einmündung mit der Breite mit dem vorgegebenen Wert ausgeleuchtet ist.

Die für das erfindungsgemäße Kraftfahrzeug und seine Ausgestaltungen genannten Merkmale, Merkmalskombinationen und deren Vorteile gelten in gleicher Weise für das erfindungsgemäße Verfahren. Weiterhin ermöglichen die im Zusammenhang mit dem erfindungsgemäßen Kraftfahrzeug und seinen Ausgestaltungen genannten gegenständlichen Merkmale die Weiterbildung des erfindungsgemäßen Verfahrens durch weitere Verfahrensschritte. Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigen:
- Fig. 1: eine schematische Darstellung eines Kraftfahrzeugs mit einem stufenweise verbreiterbaren Kreuzungslicht in einem ersten Abstand zu einer Kreuzung gemäß einem Ausführungsbeispiel der Erfindung; und
- Fig. 2: eine schematische Darstellung des Kraftfahrzeugs mit dem stufenweise verbreiterbaren Kreuzungslicht in einem zweiten, geringeren Abstand zur Kreuzung gemäß dem Ausführungsbeispiel der Erfindung.

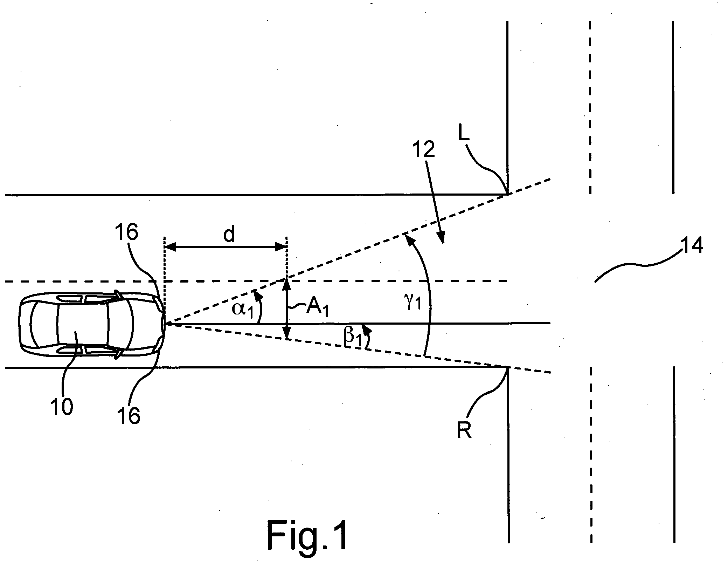

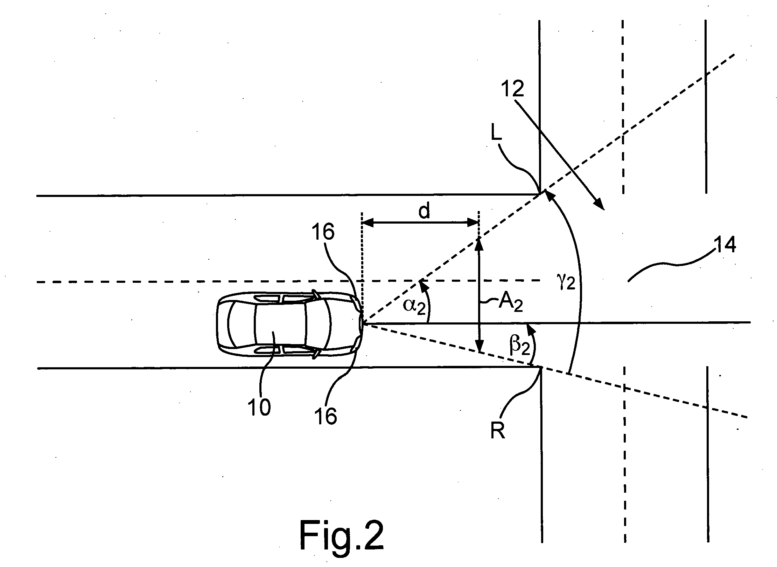

Fig. 1 und Fig. 2 zeigen eine schematische Darstellung eines Kraftfahrzeugs 10 mit einem stufenweise verbreiterbarem Kreuzungslicht 12, das hier schematisch als vom Kraftfahrzeug 10 ausgehender Lichtkegel veranschaulicht ist, wobei sich das Kraftfahrzeug 10 in Fig. 1 weiter entfernt von einer Kreuzung 14 befindet als in Fig. 2. Das Kraftfahrzeug 10 weist frontseitig zwei Hautscheinwerfer 16 auf. In diese können unterschiedliche Lichtfunktionen wie Abblendlicht, Fernlicht, Standlicht und Kreuzungslicht 12 integriert sein. Um die Funktion des Kreuzungslichts 12 bereitzustellen, weist ein jeweiliger Hauptscheinwerfer 16 dem Kreuzungslicht 12 zugeordnete Segmente mit jeweils zumindest einer darin angeordneten Lichtquelle, insbesondere LEDs, auf. Ein dem Kreuzungslicht 12 zugeordnetes Segment kann dabei so verstanden werden, dass diese Segmente ausschließlich zum Zweck der Bereitstellung des Kreuzungslichts 12 angesteuert werden. Insbesondere werden die Lichtquellen in diesen Segmenten nur aktiviert, wenn das Kreuzungslicht 12 aktiviert wird und nicht zum Bereitstellen weiterer Lichtfunktionen, wie z.B. Abblendlicht, Fernlicht oder Nebellicht.

Die Verwendung von LEDs als Lichtquellen ermöglicht dabei auf vorteilhafte Weise eine besonders kompakte Bauform der Hauptscheinwerfer 16 und insbesondere die Ausbildung der Hauptscheinwerfer 16 mit sehr vielen einzeln ansteuerbaren Segmenten in kompakter Weise. Zudem sind LEDs besonders energieeffizient, so dass sich insgesamt auf besonders einfache und kostengünstige Weise eine vielstufige und damit besonders anpassungsfähige Beleuchtungssteuerung bzw. -regelung des Kreuzungslichts 12 ermöglichen lässt.

Dabei können nun in jedem Segment auch mehrere Lichtquellen angeordnet sein. Weiterhin kann in jedem Segment auch mindestens ein der Lichtquelle bzw. den Lichtquellen zugeordnetes optisches Element, insbesondere mindestens ein Reflektor und/oder eine Linse, bereitgestellt sein, um eine gewünschte Beleuchtungsstärkeverteilung für das Kreuzungslicht 12 bereitzustellen.

Darüber hinaus weist das Kraftfahrzeug 10 eine Steuereinrichtung auf, die dazu ausgelegt ist, die Hauptscheinwerfer 16 anzusteuern und das Kreuzungslicht 12 zu aktivieren, wenn das Kraftfahrzeug 10 sich einer Kreuzung 14 nähert und einen vorgebbaren Abstand zur Kreuzung 14 unterschreitet. Dieser Abstand kann dabei beispielsweise auch in Abhängigkeit von der Geschwindigkeit des Kraftfahrzeugs 10 vorgegeben werden, z.B. kann er umso größer sein, je schneller das Kraftfahrzeug 10 fährt, um den Fahrer somit geschwindigkeitsangepasst rechtzeitig auf die Kreuzung aufmerksam zu machen. Des Weiteren kann der vorgebbaren Abstand für den linken und den rechten Hauptscheinwerfer 16 jeweils auch unterschiedlich und an eine Kreuzungsgeometrie angepasst sein.

In Fig. 1 und Fig. 2 hat das Kraftfahrzeug 10 den vorgebbaren Abstand bzw. die jeweiligen vorgebbaren Abstände für den linken und rechten Hauptscheinwerfer 16 unterschritten und das Kreuzungslicht 12 der jeweiligen Hauptscheinwerfer 16 ist aktiviert. Dabei ist das Kraftfahrzeug 10 nun so ausgestaltet, dass die Segmente der jeweiligen Hauptscheinwerfer 16 bei der Annäherung an die Kreuzung 14 derart angesteuert werden, dass sich die Abmessung A1 in Fig. 1 und A2 in Fig. 2 des ausgeleuchteten Bereichs in einem gegebenen Abstand d in Fahrtrichtung vor dem Kraftfahrzeug 10 in einer horizontalen Richtung senkrecht zur Längsachse des Kraftfahrzeugs 10 in einer Mehrzahl an Stufen stufenweise vergrößert. Diese Vergrößerung ist insbesondere am Vergleich der beiden Darstellungen von Fig. 1 und Fig. 2 zu erkennen. Mit anderen Worten vergrößert sich somit ein Öffnungswinkel γ₁ (in Fig. 1), γ₂ (in Fig. 2) des durch das Kreuzungslicht 12 bereitgestellten Gesamtlichtkegels in horizontaler Richtung. Diese Vergrößerung erfolgt dabei in Abhängigkeit von einem Abstand zur Kreuzung und kann z.B. für den linken und rechten Hauptscheinwerfer 16 in einer besonders einfachen Ausführungsform symmetrisch erfolgen, oder, wie hier dargestellt, auch asymmetrisch bezüglich der Fahrzeuglängsachse. Bei einer asymmetrischen Ausleuchtung hängen die jeweiligen stufenweise Vergrößerungen der Teilöffnungswinkel α₁, β₁ (in Fig. 1) bzw. α₂, β₂ (in Fig. 2) des Gesamtöffnungswinkels γ₁, γ₂ bezogen auf die Fahrzeuglängsachse bevorzugt von den jeweiligen Abständen des Kraftfahrzeugs 10 von der nächsten linken Einmündung und der nächsten rechten Einmündung ab, z.B. bemessen an eine jeweiligen Bezugspunkt L, R für die linke Einmündung und für die rechte Einmündung.

Die Ansteuereinheit des statischen Kurvenlichts 12 nutzt weiterhin Navigations- und Kameradaten. Die Navigationsdaten ermöglichen die Positionierung des Kraftfahrzeugs 10 in einer digitalen Karte und geben Auskunft über die Entfernung zur Kreuzung 14, die Anzahl der Fahrspuren, sowohl in Fahrt- als auch in Gegenrichtung, und die Richtung und den Öffnungswinkel der Abzweigungen. Die Kameradaten ermöglichen eine spurgenaue Einordnung des Kraftfahrzeugs 10 in der digitalen Karte. Die Informationen geben Aufschluss über die Straßenbreite auf jeder Seite des Kraftfahrzeugs 10. Definiert man nun z.B. eine Ausleuchtbreite, die im Kreuzungsbereich 14 zusätzlich zu der Straßenbreite ausgeleuchtet werden soll, berechnet die Ansteuerung bei Annäherung an die Kreuzung 14 oder Einmündung einen jeweiligen Öffnungswinkel α₁, β₁ bzw. α₂, β₂ separat für den linken und den rechten Hauptscheinwerfer, der durch das statische Kurvenlicht 12 ausgeleuchtet werden soll. Dies ermöglicht vorteilhafterweise eine prädikative, adaptive und für beide Hauptscheinwerfer 16 individuelle Ausleuchtung des Kreuzungsbereichs 14.

## Patentansprüche

1. Kraftfahrzeug (10) mit mindestens einem Hauptscheinwerfer (16) zum Bereitstellen eines statischen Kreuzungslichts (12), wobei das Kraftfahrzeug (10) eine Steuereinrichtung zum Ansteuern des zumindest einen Hauptscheinwerfers (16) aufweist, die dazu ausgelegt ist, das Kreuzungslicht (12) zu aktivieren, wenn das Kraftfahrzeug (10) einen vorgebbaren Abstand zu einer Kreuzung (14) oder Einmündung unterschreitet,
**dadurch gekennzeichnet, dass**
der mindestens eine Hauptscheinwerfer (16) eine Mehrzahl an dem Kreuzungslicht zugeordneten Segmenten aufweist, wobei in jedem Segment zumindest eine Lichtquelle angeordnet ist, wobei die Steuereinrichtung dazu ausgelegt ist, bei aktiviertem Kreuzungslicht (12) und bei einer Annäherung des Kraftfahrzeugs (10) an die Kreuzung (14) oder Einmündung, die Segmente derart anzusteuern, dass sich eine Abmessung (A₁; A₂) eines durch das Kreuzungslicht (12) ausgeleuchteten Bereichs in einem gegebenen Abstand (d) in Fahrtrichtung vor dem Kraftfahrzeug (10) in einer horizontalen Richtung senkrecht zur Längsachse des Kraftfahrzeugs (10) in einer Mehrzahl an Stufen stufenweise vergrößert, wobei der Steuereinrichtung ein Wert für eine auszuleuchtende Breite (R, L) an einem Ort der Kreuzung (14) oder Einmündung senkrecht zu einem Straßenverlauf einer aktuell befahrenen Straße vorgegeben ist und die Steuereinrichtung dazu ausgelegt ist, die Segmente derart anzusteuern, dass bei Annäherung des Kraftfahrzeugs (10) an die Kreuzung (14) oder Einmündung der Ort der Kreuzung (14) oder Einmündung mit der Breite (R, L) mit dem vorgegebenen Wert ausgeleuchtet ist.

2. Kraftfahrzeug (10) nach Anspruch 1,
**dadurch gekennzeichnet, dass**
die Steuereinrichtung dazu ausgelegt ist, die Segmente in Abhängigkeit von zumindest einer Eingangsgröße aus der Gruppe Abstand des Kraftfahrzeugs (10) von der Kreuzung (14) oder Einmündung, Breite einer aktuell befahrenen Straße, Position des Kraftfahrzeugs (10) auf der aktuell befahrenen Straße in einer Richtung senkrecht zu einem Straßenverlauf der aktuell befahrenen Straße und aktuelle Geschwindigkeit des Kraftfahrzeugs (10) zu steuern.

3. Kraftfahrzeug (10) nach einem der vorhergehenden Ansprüche,
**dadurch gekennzeichnet, dass**
die Steuereinrichtung dazu ausgelegt ist, die Segmente derart anzusteuern, dass sich die Anzahl an aktivierten Lichtquellen erhöht.

4. Kraftfahrzeug (10) nach einem der vorhergehenden Ansprüche,
**dadurch gekennzeichnet, dass**
das Kraftfahrzeug (10) zwei als der mindestens eine Hauptscheinwerfer (16) ausgebildete Hauptscheinwerfer (16) aufweist, wobei die Steuereinrichtung dazu ausgebildet ist, die Segmente eines jeweiligen Hauptscheinwerfers (16) separat anzusteuern.

5. Kraftfahrzeug (10) nach einem der vorhergehenden Ansprüche,
**dadurch gekennzeichnet, dass**
der bei aktiviertem Kreuzungslicht (12) durch die Segmente der zwei Hauptscheinwerfer (16) bereitgestellte Gesamtlichtkegel in einer horizontalen Ebene einen Öffnungswinkel (γ₁; γ₂) aufweist, der durch eine Fahrzeuglängsachse in einen ersten Winkel (α₁; α₂) und einen zweiten Winkel (β₁; β₂) geteilt ist, wobei die Steuereinrichtung dazu ausgelegt ist, bei einer Annäherung des Kraftfahrzeugs (10) an eine Kreuzung (14) mit einer in Fahrtrichtung linken Einmündung und einer in Fahrtrichtung rechten Einmündung die Segmente eines jeweiligen Hauptscheinwerfers (16) derart separat anzusteuern, dass sich der erste Winkel (α₁; α₂) in Abhängigkeit von einer Entfernung des Kraftfahrzeugs (10) von einer in Fahrtrichtung linken Einmündung stufenweise vergrößert und der zweite Winkel (β₁; β₂) sich in Abhängigkeit von einer Entfernung von der in Fahrtrichtung rechten Einmündung stufenweise vergrößert.

6. Verfahren zum Bereitstellen eines statischen Kreuzungslichts (12) mittels zumindest eines Hauptscheinwerfers (16) eines Kraftfahrzeugs (10), wobei das Kreuzungslicht (12) aktiviert wird, wenn das Kraftfahrzeug (10) einen vorgebbaren Abstand zu einer Kreuzung (14) oder Einmündung unterschreitet,
**dadurch gekennzeichnet, dass**
der mindestens eine Hauptscheinwerfer (16) eine Mehrzahl an dem Kreuzungslicht (12) zugeordneten Segmenten aufweist, wobei in jedem Segment zumindest eine Lichtquelle angeordnet ist, wobei bei aktiviertem Kreuzungslicht (12) und bei einer Annäherung des Kraftfahrzeugs (10) an die Kreuzung (14) oder Einmündung, die Segmente derart angesteuert werden, dass sich eine Abmessung (A₁; A₂) eines durch das Kreuzungslicht (12) ausgeleuchteten Bereichs in einem gegebenen Abstand (d) in Fahrtrichtung vor dem Kraftfahrzeug (10) in einer horizontalen Richtung senkrecht zur Längsachse des Kraftfahrzeugs (10) in einer Mehrzahl an Stufen stufenweise vergrößert, wobei ein Wert für eine auszuleuchtende Breite (R,L) an einem Ort der Kreuzung (14) oder Einmündung senkrecht zu einem Straßenverlauf einer aktuell befahrenen Straße vorgegeben ist und die Segmente derart angesteuert werden, dass bei Annäherung des Kraftfahrzeugs (10) an die Kreuzung (14) oder Einmündung der Ort der Kreuzung (14) oder Einmündung mit der Breite (R,L) mit dem vorgegebenen Wert ausgeleuchtet ist.

## Claims

1. Motor vehicle (10) having at least one main headlight (16) for providing a static intersection light (12), wherein the motor vehicle (10) has a control device for actuating the at least one main headlight (16), which is designed to activate the intersection light (12), if the motor vehicle (10) falls short of a specifiable distance to an intersection (14) or junction,
**characterised in that**
the at least one main headlight (16) has a plurality of segments assigned to the intersection light, wherein in each segment at least one light source is arranged, wherein the control device is designed when the intersection light (12) is activated and when the motor vehicle (10) approaches the intersection (14) or junction to actuate the segments, in such a manner that a dimension (A₁; A₂) of an area illuminated by the intersection light (12) at a given distance (d) in the direction of travel in front of the motor vehicle (10) increases stepwise in a horizontal direction perpendicular to the longitudinal axis of the motor vehicle (10) in a plurality of steps, wherein a value for a width (R, L) to be illuminated at a location of the intersection (14) or junction perpendicular to a road course of a currently travelled road is specified to the control device and the control device is designed to activate the segments in such a manner that when the motor vehicle (10) approaches the intersection (14) or junction the location of the intersection (14) or junction with the width (R, L) is illuminated with the specified value.

2. Motor vehicle (10) according to claim 1,
**characterised in that**
the control device is designed to control the segments in dependence on at least one input variable from the group of distance of the motor vehicle (10) from the intersection (14) or junction, width of a currently travelled road, position of the motor vehicle (10) on the currently travelled road in a direction perpendicular to a road course of the currently travelled road and current speed of the motor vehicle (10).

3. Motor vehicle (10) according to any one of the preceding claims,
**characterised in that**
the control device is designed to actuate the segments in such a manner that the number of activated light sources increases.

4. Motor vehicle (10) according to any one of the preceding claims,
**characterised in that**
the motor vehicle (10) has two main headlights (16) designed as the at least one main headlight (16), wherein the control device is designed to actuate the segments of a respective main headlight (16) separately.

5. Motor vehicle (10) according to any one of the preceding claims,
**characterised in that**
the overall light cone provided, when the intersection light (12) is activated, by the segments of the two main headlights (16) in a horizontal plane has an opening angle (γ₁; γ₂), which is divided by a vehicle longitudinal axis into a first angle (α_{1;} α₂) and a second angle (β₁; β₂), wherein the control device is designed, when the motor vehicle (10) approaches an intersection (14) with a left junction in the travel direction and a right junction in the travel direction to actuate the segments of a respective main headlight (16) separately in such a manner that the first angle (α_{1;} α₂) increases stepwise in dependence on a distance of the motor vehicle (10) from a left junction in the travel direction and the second angle (β₁; β₂) increases stepwise in dependence on a distance from the right junction in the travel direction.

6. Method for providing a static intersection light (12) by means of at least one main headlight (16) of a motor vehicle (10), wherein the intersection light (12) is activated, if the motor vehicle (10) falls short of a specifiable distance to an intersection (14) or junction,
**characterised in that**
the at least one main headlight (16) has a plurality of segments assigned to the intersection light (12), wherein in each segment at least one light source is arranged, wherein when the intersection light (12) is activated and when the motor vehicle (10) approaches the intersection (14) or junction, the segments are actuated in such a manner that a dimension (A₁; A₂) of an area illuminated by the intersection light (12) at a given distance (d) in the direction of travel in front of the motor vehicle (10) increases stepwise in a horizontal direction perpendicular to the longitudinal axis of the motor vehicle (10) in a plurality of steps, wherein the a value for a width (R, L) to be illuminated at a location of the intersection (14) or junction perpendicular to a road course of a currently travelled road is specified and the segments are actuated in such a manner that when the motor vehicle (10) approaches the intersection (14) or junction the location of the intersection (14) or junction with the width (R, L) is illuminated with the specified value.

## Revendications

1. Véhicule automobile (10) avec au moins un projecteur principal (16) pour la préparation d'un feu de croisement statique (12), dans lequel le véhicule automobile (10) présente un dispositif de commande pour la commande de l'au moins un projecteur principal (16), qui est conçu pour activer le feu de croisement (12), lorsque le véhicule automobile (10) sous-dépasse une distance pouvant être prédéfinie par rapport à un croisement (14) ou une embouchure,
**caractérisé en ce que**
l'au moins un projecteur principal (16) présente une pluralité de segments associés au feu de croisement, dans lequel au moins une source de lumière est agencée dans chaque segment, dans lequel le dispositif de commande est conçu pour commander les segments, lorsque le feu de croisement (12) est activé et lors d'une approche du véhicule automobile (10) du croisement (14) ou de l'embouchure, de sorte qu'une dimension (A₁ ; A₂) d'une zone éclairée par le feu de croisement (12) s'accroît graduellement en une pluralité de paliers à une distance donnée (d) dans le sens de déplacement devant le véhicule automobile (10) dans une direction horizontale perpendiculairement à l'axe longitudinal du véhicule automobile (10), dans lequel une valeur pour une largeur à éclairer (R, L) à un endroit du croisement (14) ou de l'embouchure est prédéfinie pour le dispositif de commande perpendiculairement à un tracé de route d'une route actuellement parcourue et le dispositif de commande est conçu pour commander les segments de sorte que lors de l'approche du véhicule automobile (10) du croisement (14) ou de l'embouchure, l'endroit du croisement (14) ou de l'embouchure est éclairé avec la largeur (R, L) avec la valeur prédéfinie.

2. Véhicule automobile (10) selon la revendication 1,
**caractérisé en ce que**
le dispositif de commande est conçu pour commander les segments en fonction d'au moins une grandeur d'entrée du groupe distance du véhicule automobile (10) par rapport au croisement (14) ou à l'embouchure, largeur d'une route actuellement parcourue, position du véhicule automobile (10) sur la route actuellement parcourue dans une direction perpendiculaire à un tracé de route de la route actuellement parcourue et vitesse actuelle du véhicule automobile (10).

3. Véhicule automobile (10) selon l'une quelconque des revendications précédentes,
**caractérisé en ce que**
le dispositif de commande est conçu pour commander les segments de sorte que le nombre de sources de lumière activées augmente.

4. Véhicule automobile (10) selon l'une quelconque des revendications précédentes,
**caractérisé en ce que**
le véhicule automobile (10) présente deux projecteurs principaux (16) formés en tant que l'au moins un projecteur principal (16), dans lequel le dispositif de commande est formé pour commander séparément les segments d'un projecteur principal (16) respectif.

5. Véhicule automobile (10) selon l'une quelconque des revendications précédentes,
**caractérisé en ce que**
le faisceau lumineux total préparé par les segments des deux projecteurs principaux (16) lorsque le feu de croisement (12) est activé présente dans un plan horizontal un angle d'ouverture (γ₁ ; γ₂), qui est divisé par un axe longitudinal de véhicule en un premier angle (α₁ ; α₂) et un deuxième angle (β₁ ; β₂), dans lequel le dispositif de commande est conçu pour commander séparément les segments d'un projecteur principal (16) respectif lors d'une approche du véhicule automobile (10) d'un croisement (14) avec une embouchure gauche dans le sens de déplacement et une embouchure droite dans le sens de déplacement de sorte que le premier angle (α₁ ; α₂) s'accroît graduellement en fonction d'une distance du véhicule automobile (10) par rapport à une embouchure gauche dans le sens de déplacement et le deuxième angle (β₁ ; β₂) s'accroît graduellement en fonction d'une distance par rapport à l'embouchure droite dans le sens de déplacement.

6. Procédé de préparation d'un feu de croisement statique (12) au moyen d'au moins un projecteur principal (16) d'un véhicule automobile (10), dans lequel le feu de croisement (12) est activé lorsque le véhicule automobile (10) sous-dépasse une distance pouvant être prédéfinie par rapport à un croisement (14) ou à une embouchure,
**caractérisé en ce que**
l'au moins un projecteur principal (16) présente une pluralité de segments associés au feu de croisement (12), dans lequel au moins une source de lumière est agencée dans chaque segment, dans lequel, lorsque le feu de croisement (12) est activé et lors d'une approche du véhicule automobile (10) du croisement (14) ou de l'embouchure, les segments sont commandés de sorte qu'une dimension (A₁ ; A₂) d'une zone éclairée par le feu de croisement (12) s'accroît graduellement en une pluralité de paliers à une distance donnée (d) dans le sens de déplacement devant le véhicule automobile (10) dans une direction horizontale perpendiculairement à l'axe longitudinal du véhicule automobile (10), dans lequel une valeur pour une largeur à éclairer (R, L) à un endroit du croisement (14) ou de l'embouchure est prédéfinie perpendiculairement à un tracé de route d'une route actuellement parcourue et les segments sont commandés de sorte que lors de l'approche du véhicule automobile (10) du croisement (14) ou de l'embouchure, l'endroit du croisement (14) ou de l'embouchure est éclairé avec la largeur (R, L) avec la valeur prédéfinie.
